# EUROPEAN PATENT APPLICATION

(11) **EP 1 261 230 A1**
(43) Date of publication of application: **27.11.2002**
(21) Application number: 01830330.5
(22) Date of filing: 22.05.2001
(51) Int. Cl.: H04Q 11/04, H04L 12/56

(54) **Method and system for header size reduction in ATM cell transmission systems**

(71) Applicant: Siemens Information and Communication Networks S.p.A., 20126 Milano (IT)
(72) Inventor: Lovino, Luigi, 20134 Milano (IT); Santacesaria, Claudio, 20139 Milano (IT)
(74) Representative: Giustini, Delio

(57) **Abstract**

This invention allows reducing the overhead by allowing the removal of the HEC (Header Error correction) byte, in systems, like radio ones, where the physical layer of the transmission stacks offer powerful error correction schemes.

Additional overhead saving can be obtained by differently coding the addressing and control portion of the ATM header, in particular the VPI and VCI.

An ATM system based on the teaching of the invention including:
- removing means (REMOVING MEANS) located in said transmitting station adapted to remove said HEC field from said header portion of each ATM cell in order to obtain non-standard cells with a shortened header;
- encoding means (ENCODING MEANS) connected at the output of said removing means and adapted to forward to a transmission unit (TRANSMITT MEANS) said non-standard cells using a physical layer including a channel coding mechanism for Forward Error Correction or FEC;
- decoding means (DECODING MEANS) located in said receiving station adapted to correct any error eventually introduced by the transmission medium by means of said FEC;
- inserting means (INSERTING MEANS) connected at the output of said decoding means and adapted to generate the removed HEC byte and adapted to insert in the received non-standard cell the generated HEC byte;
- outputting means adapted to output a standard cell available at the output of said inserting means.

## Description

### BACKGROUND AND FIELD OF THE INVENTION

The present invention relates to ATM transmission systems and particularly to the reducing the overhead by allowing the removal of the HEC (Header Error Correction) byte, in systems, like radio ones, where the physical layer of the transmission stacks offer powerful error correction schemes.

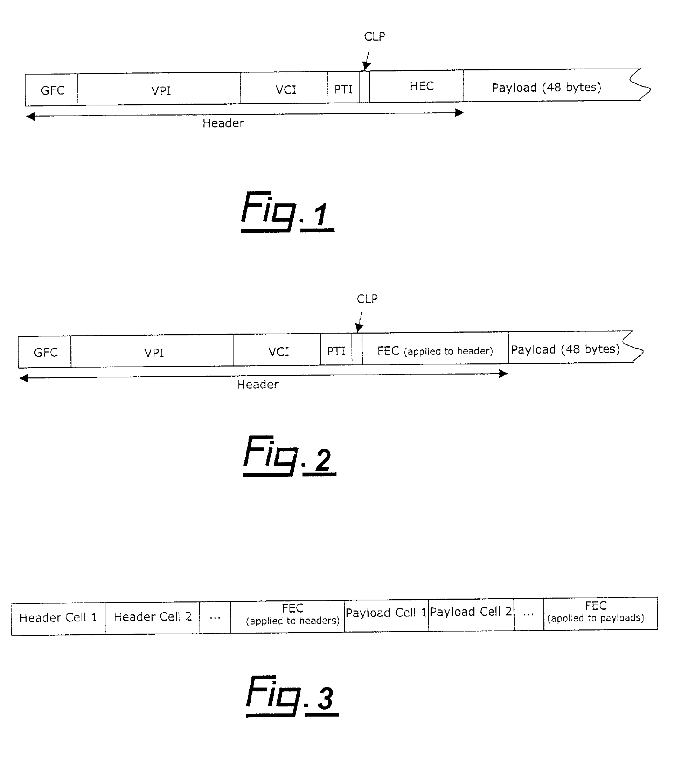

The ATM cell, basic unit of an ATM transmission, is shown in figure 1. Its structure comprises a 5 byte header and a 48 byte payload. The header comprises 4 bytes of addressing (Virtual Path Identifier or VPI and Virtual Channel Identifier or VCI) and control information (Payload Type or PT, Cell Loss Priority or CLP and, only for UNI interfaces, Generic Flow Control or GFC) and a fifth byte which is calculated from the first 4 and is called Header Error Correction (HEC); said fifth byte is an error detection / error correction code applied to the first four bytes of the header. It is used to correct up to one wrong bit in the header and to detect uncorrectable wrong headers in order to discard the cell; an additional purpose is to allow cell delineation in systems where ATM cells are continuously transmitted over the physical medium without other delineation means. The overhead of 5 bytes every 48 bytes of useful information, introduced by ATM, is often considered to be excessive being around 10%.

Moreover, the error correction capability of HEC is very limited and techniques are known to improve it (Yuji Nakayama and Satoru Aikawa - "Cell Discard and TDMA Synchronization using FEC in the Wireless ATM Systems" - IEEE Journal on Selected Areas in Communications, Vol. 15, No. 1, January 1997) by introduction of even larger overhead.

Figure 2 shows the Nakayama approach disclosed in the quoted paper to improve the performance of an ATM link by replacing the HEC with a more powerful FEC code. This is certainly good to improve performance but it also increases the overhead; since one of the major concerns about adopting ATM is its already very high overhead, it is quite unacceptable to further increase the overhead.

US 6,084,888 by Watanabe et al. discloses a technique to group ATM headers from several cells and to encode with a FEC (Forward Error Correction) the group together. The ATM cell payload of said several cells are transmitted separately in a different portion of the transmission frame. This technique allows improving the error correction capability and the robustness of the system without an increase in overhead and possibly with even an overhead reduction with respect to the HEC.

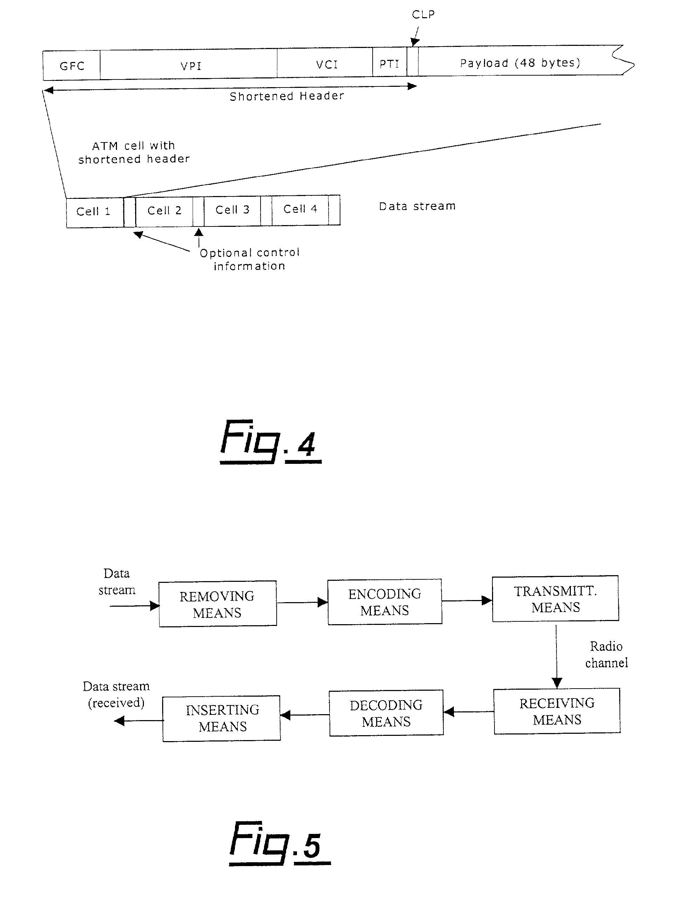

Figure 3 shows the Watanabe approach adopted in order to improve error correction capability without excessive overhead increase: the idea is to group several cell headers together and to protect the group with a single FEC code block; the cell payloads are also grouped and protected with a different FEC block.

This is certainly a good approach when the physical layer does not offer an error correction functionality or the physical layer can be modified; nevertheless it is not always possible to group headers and payloads and apply different FEC codes: reasons may be that the delay introduced by the process of grouping several cells is not always acceptable, that the availability of two different FEC encoders/decoders might not apply to some systems and in many cases the general architecture of the communication system might include the FEC functionality in the physical layer without the possibility to modify it (for example a continuous mode FEC like convolutional codes would not allow the separation of different blocks).

### SCOPE AND SUMMARY OF THE INVENTION

Object of the present invention is to overcome the drawbacks of the known wireless ATM systems and in the meantime guarantee the maximum overhead saving.

According to the invention the target is achieved using the method of claim 1 and/or the system of claim 8.

Additional features of the present invention which are believed to be novel are set forth with particularity in the appended claims.

The claimed method is particularly adapted to be used in some transmission systems, like radio point to point and point to multipoint but also mobile radio and various types of copper cable systems, and in general in systems in which the physical layer includes means to deal with a channel with unacceptable bit error rate. This is not common in optical fiber transmissions where the channel quality is inherently superior. Said means usually include a channel coding mechanism for Forward Error Correction (FEC). In such systems FEC is required to be applied, in the transmission unit, to the whole ATM cell and possibly to additional information used for control purposes, in order to allow reliable operation of the receiver unit. The type of FEC and whether each ATM cell and each piece of additional information are encoded separately, in groups, after splitting in smaller slices or within a continuous stream, is implementation dependent and it is not relevant to the sake of this invention.

Said FEC is usually much more powerful both in error correction and in error detection capability than the HEC. Such systems usually offer means to delineate cell borders independently of the HEC.

In such systems, where the physical layer offers a powerful error correction / error detection functionality, according to present invention, the HEC byte is removed from the ATM cell header and not replaced with anything else. This guarantees the maximum overhead saving.

The HEC byte, removed by the transmitter equipment, is regenerated by the receiver equipment.

According to present invention, another overhead reduction can be achieved by replacing the addressing information (VPI and VCI), and optionally also the control information, of ATM header with a shorter "address identifier" or "address and control identifier" based on a different addressing scheme.

In multipoint systems, the ATM addressing based on VPI and VCI is not the most convenient; according to an appended claim of the present invention, the addressing comprises a couple of identifiers: the terminal identifier that identifies the terminal station, that is one of the end points of the multipoint architecture and the connection identifier, which identifies the connection within the group of the connections belonging to or terminated in the already identified terminal.

### BRIEF DESCRIPTION OF THE DRAWINGS

The invention, together with further objects and advantages thereof, may be understood with reference to the following description, taken in conjunction with the accompanying drawings and in which
**Figure 1** shows the well know ATM cell structure (belonging to prior art).
**Figure 2** shows how Nakayama paper improves performance by replacing HEC with a more powerful FEC to be applied to the ATM cell header (belonging to prior art).
**Figure 3** shows how Watanabe patent improves performance without increasing overhead (prior art).
**Figure 4** shows the ATM header of this invention, which reduces the overhead by removing the HEC, capitalizing on the physical layer error correction code.
**Figure 5** shows a block diagram of an ATM system based on the teaching of the present invention.
**Figure 6** shows additional overhead reduction obtained by replacing the addressing information of ATM header (VPI and VCI) with a different and shorter "address identifier".
**Figure 7** shows additional overhead reduction obtained by replacing the control and addressing information of ATM header with a different and shorter "address and control identifier".
**Figure 8** shows an address identifier format that can be useful in multipoint systems.

### DETAILED DESCRIPTION OF THE PREFERRED EMBODIMENTS

Figure 1 shows the well known UNI (User Network Interface) ATM (Asynchronous Transfer Mode) cell structure: in front of the 48 byte payload, a 5 byte header can be found which comprises a 4 bit GFC (Generic Flow Control) field, a 2 bytes VPI (Virtual Path Identifier), a 1 byte VCI (Virtual Channel Identifier), a 3 bit PTI (Payload Type Identifier), a 1 bit CLP (Cell Loss Priority) and a 1 byte HEC (Header Error Control); VPI and VCI together represent the ATM connection identifier within the ATM cell addressing scheme.

ATM also defines a NNI (Network to Network Interface): cell format at NNI drops the GFC and extends VPI to 2 bytes and 4 bits.

HEC in the ATM header has a double functionality: it is an error check on the header to be used to correct up to 1 bit errors and to detect uncorrectable errors within the header and it is used to delineate the cell in a continuous flow of cells. This second function is often useless because many ATM communication systems offer synchronization means than can also be used to delineate the cell borders. As far as the first function, ATM was initially designed to be used over optical fiber where the channel bit error rate is natively very low. The header information nevertheless is very critical because an error in the header can cause a misrouting of the ATM cell with much more severe problems than the simple cell loss or payload error. From this observation ATM was designed with a very weak error correction just on the header; the HEC is a weak code which proves to be more than enough on optical fiber transmission. When ATM starts to be used on means, which are not so good as fiber, like radio transmissions, both fixed and mobile, or copper wires, the situation turns out to be different.

The present invention applies to those systems where the FEC processing is included in the physical layer (in the often called Transmission Convergence sublayer) and offers, to the whole ATM cell, a much stronger protection than the HEC protection to the cell header.

Figure 4 shows the basic idea of the present invention. In said systems where FEC protects the whole cell, the HEC byte of the header, according to the invention is removed achieving an overhead reduction with practically no impact on performance.

The shortened ATM cell of the invention comprises 4 header bytes and the same 48 payload bytes as before for a total of 52 bytes. A sequence of cells and possibly other control information constitutes the data stream which is processed in the transmission chain by a FEC encoder (part of the transmission physical layer) and then sent to the actual transmitter which produces the signal that is emitted over the radio channel. The receiver translates the radio signal into electrical or digital information which is processed by the FEC decoder. After the FEC decoding the original data stream is reconstructed at the receiver.

Figure 5 shows a block diagram of an ATM system based on the teaching of the present invention and including.
- removing means REMOVING MEANS located in said transmitting station adapted to remove said HEC field from said header portion of each ATM cell in order to obtain non-standard cells with a shortened header;
- encoding means ENCODING MEANS connected at the output of said removing means and adapted to forward to a transmission unit TRANSMITT. MEANS said non-standard cells using a physical layer including a channel coding mechanism for Forward Error Correction or FEC;
- decoding means DECODING MEANS located in said receiving station adapted to correct any error eventually introduced by the transmission medium by means of said FEC;
- inserting means INSERTING MEANS connected at the output of said decoding means and adapted to generate the removed HEC byte and adapted to insert in the received non-standard cell the generated HEC byte;
- outputting means adapted to output a standard cell available at the output of said inserting means.

The format of the data stream after FEC coding cannot be shown because it tightly depends on the type of FEC that the physical layer adopts: in some systems the FEC will be an overhead periodically inserted in the data stream, in other systems the FEC will produce a completely different bit stream.

Figure 5 shows a further overhead reduction which this invention makes possible: for links with a limited number of connections a short address identifier replaces the VPI and VCI fields, still identifying the ATM connection. The size of this field is system dependent but it may reasonably be much shorter than 3 bytes; in some embodiments it is 2 bytes, in other embodiments it is 1 byte.

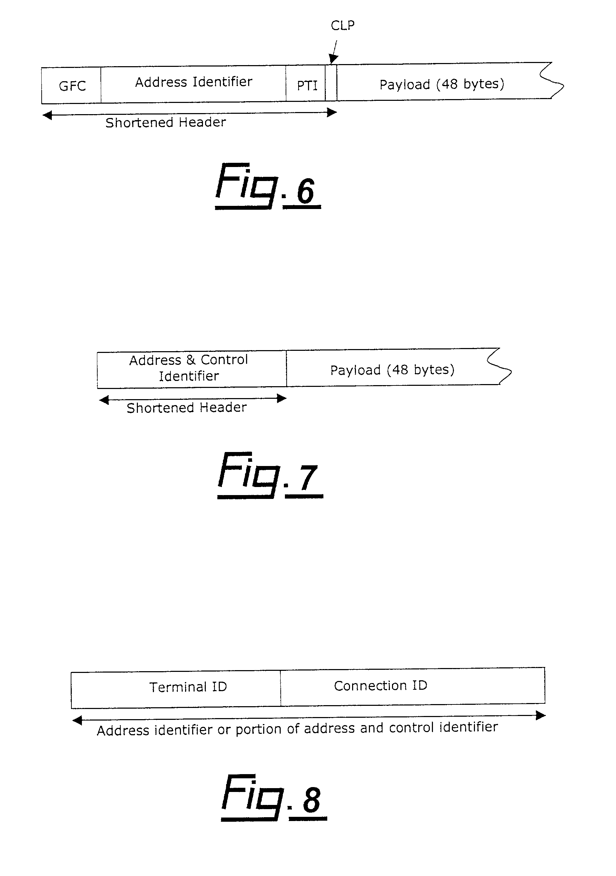

Figure 6 shows another overhead reduction which this invention makes possible: an address and control identifier replaces the whole ATM header. The size of this field is system dependent but it may reasonably be much shorter than 4 bytes; in some embodiments it is 2 bytes, in other embodiments it is 1 byte.

The current invention in an appended claim also gives a format for the address identifier or the address portion of the address and control identifier which is useful in multipoint systems such as point to multipoint wireless or cable access systems or multipoint to multipoint wireless distribution systems.

In said systems, it is difficult for each terminal (each point at a multipoint side) to receive the ATM cells and analyze the VPI and VCI or a generic address identifier to check whether the ATM cell is directed to the terminal itself or not. According to the invention (Fig. 7) the address portion of the header, both when it is reduced in size with respect to conventional ATM cell or not reduced or perhaps even enlarged, contains a terminal identifier and a connection identifier: the terminal identifier univocally identifies the receiving terminal among the several terminals; the connection identifier will identify each connection within the group of connections belonging to the same terminal. With this approach the complexity of the terminal is largely reduced.

While a particular embodiment of the present invention has been shown and described, it should be understood that the present invention is not limited thereto since other embodiments may be made by those skilled in the art.

It is thus contemplated that the present invention encompasses any and all such embodiments covered by the following claims.

## Claims

1. Method to transmit ATM cells including an header portion and a payload portion, said header portion including a byte for Header Error Control or HEC, a Virtual Path Identifier Field and a Virtual Channel Identifier Field, said method being adapted to transmit said ATM cells from a transmitting station to a receiving station and including the steps of:
1. removing in the transmitting station said HEC field from said header portion of each ATM cell in order to obtain non-standard cells with a shortened header;
2. transmitting said non-standard cells using a physical layer including a channel coding mechanism for Forward Error Correction or FEC;
3. receiving in the receiving station said non standard ATM cells and correcting any error eventually introduced by the transmission medium by means of said FEC;
4. generating, always in the receiving station, the removed HEC byte and inserting in the received non-standard cell the generated HEC byte;
5. outputting a standard cell obtained after the steps 1. to 4.

2. The method of claim 1 where said shortened header is shorter than 5 bytes.

3. The method of claim 2, where said modified header is 4 bytes long and comprises the first 4 bytes of said traditional header and where error control and correction techniques are applied at the physical layer on whole ATM cells with a stronger detection/correction capability than the ATM HEC byte.

4. The method of one of the previous claims, where said modified header is the first four bytes of the traditional header where VPI and VCI fields are replaced by an "address identifier", identifying a connection between two different ATM nodes, said address identifier being shorter than 3 bytes.

5. The method of one of claims from 1 to 3, where said modified header comprises an "address and control identifier", said address and control identifier being shorter than 4 bytes.

6. The method of claim 4 where said address identifier comprises a terminal identifier, identifying the terminal end point of the ATM connection within a multipoint system and a connection identifier which identifies the connection within the group of ATM connections belonging to said terminal end point.

7. The method of claim 5 where said address and control identifier comprises a terminal identifier, identifying the terminal end point of the ATM connection within a multipoint system and a connection identifier which identifies the connection within the group of ATM connections belonging to said terminal end point.

8. System for the transmission of ATM cells including an header portion and a payload portion, said header portion including a byte for Header Error Control or HEC, a Virtual Path Identifier Field and a Virtual Channel Identifier Field, said system being adapted to transmit said ATM cells from a transmitting station to a receiving station and including:
• removing means (REMOVING MEANS) located in said transmitting station adapted to remove said HEC field from said header portion of each ATM cell in order to obtain non-standard cells with a shortened header;
• encoding means (ENCODING MEANS) connected at the output of said removing means and adapted to forward to a transmission unit (TRANSMITT. MEANS) said non-standard cells using a physical layer including a channel coding mechanism for Forward Error Correction or FEC;
• decoding means (DECODING MEANS) located in said receiving station adapted to correct any error eventually introduced by the transmission medium by means of said FEC;
• inserting means (INSERTING MEANS) connected at the output of said decoding means and adapted to generate the removed HEC byte and adapted to insert in the received non-standard cell the generated HEC byte;
• outputting means adapted to output a standard cell available at the output of said inserting means.

9. The system of claim 8 where said removing means are adapted to output an header shorter than 5 bytes.

10. The system of claim 8 where said removing means are adapted to output an header 4 bytes long including the first 4 bytes of said traditional header and where error control and correction techniques are applied at the physical layer on whole ATM cells with a stronger detection/correction capability than the ATM HEC byte.

11. The system of one of the previous claims 8 to 10, in which said removing means are adapted to replace said VPI and VCI fields with an "address identifier", identifying a connection between two different ATM nodes, said address identifier being shorter than 3 bytes.

12. The system of one of claims from 8 to 10, in which said removing means are adapted to replace the first four bytes of the traditional header with an "address and control identifier", said address and control identifier being shorter than 4 bytes.

13. The system of claim 11 where said address identifier comprises a terminal identifier, identifying the terminal end point of the ATM connection within a multipoint system and a connection identifier which identifies the connection within the group of ATM connections belonging to said terminal end point.

14. The system of claim 12 where said address and control identifier comprises a terminal identifier, identifying the terminal end point of the ATM connection within a multipoint system and a connection identifier which identifies the connection within the group of ATM connections belonging to said terminal end point.
